# DEMANDE DE BREVET EUROPEEN

(11) **EP 4 765 165 A1**
(43) Date de publication de la demande: **24.06.2026**
(21) Numéro de dépôt: 25225940.3
(22) Date de dépôt: 19.12.2025
(51) Int. Cl.: H01B 3/44, B29B 17/04, C08L 23/04, C08L 23/16

(54) **CÂBLES ÉLECTRIQUES ET ACCESSOIRES COMPRENANT UN SYSTÈME ISOLANT INCLUANT DES CHARGES SOLIDES À BASE D'UN POLYMÈRE RÉTICULÉ**

(30) Priorité: 20.12.2024 FR 2414942
(71) Demandeur: Nexans, 92400 Courbevoie (FR)
(72) Inventeur: DESMARS, Loriane, 92400 COURBEVOIE (FR); LARCHE, Jean-François, 92400 COURBEVOIE (FR); SLAWINSKI, Lucile, 92400 COURBEVOIE (FR)
(74) Mandataire: Cabinet Boettcher

(57) **Abrégé**

L'invention concerne un câble (10) électrique comprenant une âme (7) conductrice et un système (9) isolant entourant ladite âme conductrice (7), et dans lequel le système isolant comprend au moins une couche (8) comprenant une matrice (11) polymère dans laquelle sont dispersées des particules (3) solides de polymère réticulé, avantageusement issu d'un recyclage.

## Description

L'invention concerne le domaine des câbles électriques du type comprenant un système isolant entourant un élément électriquement conducteur (aussi désignée par le terme générique « âme conductrice ») et des accessoires associés à de tels câbles. L'invention concerne plus précisément un nouveau type de système isolant comprenant une charge solide particulière, qui peut avantageusement être issue d'un recyclage.

De nombreux câbles électriques produits et exploités dans le monde sont formés d'un ou plusieurs élément(s) conducteur(s) allongé(s) formant une âme conductrice et d'un système isolant entourant cette âme conductrice. Des accessoires pour câbles comportant un système isolant sont également connus. Au sens de la présente description les accessoires pour câble incluent les dispositifs bien connus en soi de jonction (connexion entre deux câbles), de distribution (connexion entre un premier câble et plusieurs câbles de distribution) et de terminaison (à l'extrémité d'un câble unique). De nombreux systèmes isolants de câbles et d'accessoires de câble sont à base d'une ou plusieurs couches réticulées (déposées autour de l'âme conductrice pour un câble et autour de la connexion ou de la terminaison pour un accessoire). Typiquement, ces systèmes isolants sont à base d'au moins un matériau polymère réticulé, notamment une polyoléfine réticulée telle que, par exemple du polyéthylène réticulé (XLPE) et/ou un élastomère. En général, le système isolant de câbles électriques est formé par extrusion à chaud d'une composition thermodurcissable.

Une telle extrusion entraîne nécessairement la formation de rebuts, notamment de rebuts de production ou de rebuts de purge de l'extrudeuse. Ces rebuts contiennent des polymères réticulés qui ne peuvent pas être réutilisés et/ou remis en forme par des procédés classiques d'extrusion et/ou d'injection thermomécaniques et qui constituent des déchets et qui ne sont que peu ou pas valorisés, hormis pour la production d'énergie par exemple à partir de purges de XLPE. Pour l'essentiel, ces déchets sont voués à une élimination coûteuse dans des structures spécialisées et satisfaisant aux critères de respect de l'environnement.

De la même façon, le système isolant de câbles électriques en fin de vie est également constitutif de déchets contenant des matériaux polymères réticulés qu'il convient aussi de traiter (inertage de câbles électriques en fin de vie).

Un inconvénient majeur des matériaux polymères réticulés est qu'ils ne sont pas directement recyclables, contrairement aux polymères thermoplastiques qui peuvent être remis en forme par chauffage. Du fait de leur réticulation, les matériaux polymères réticulés ont une structure tridimensionnelle figée qui ne peut pas être modifiée par traitement thermique.

Un but de la présente invention est de fournir une possibilité de s'affranchir du traitement des rebuts et déchets à base de polymères réticulés précités, en évitant notamment les coûts y afférant, par exemple pendant la fabrication des câbles (traitement des rebuts de production et des purges) ou par la suite, lors de l'inertage de câbles électriques en fin de vie

A cet effet, la présente invention propose une voie de valorisation des rebuts et déchets à base de polymères réticulés.

A cet effet, la présente invention propose de réduire en particules solides les polymères réticulés du type présents dans les rebuts et déchets précités, et d'employer les particules de polymère réticulé ainsi obtenues à titre de charge solide particulaire dans des couches isolantes de câble électrique ou d'accessoires de câble électrique.

Plus précisément, la présente invention a pour objet un dispositif électrique muni d'un système isolant, ledit dispositif étant un câble électrique ou un accessoire pour câble électrique, et où le système isolant du dispositif inclut au moins une couche comprenant une matrice polymère dans laquelle sont dispersées des particules solides de polymère réticulé.

Selon un premier aspect, l'invention a pour objet un dispositif de ce type qui est un câble électrique comprenant une âme conductrice et un système isolant entourant ladite âme conductrice, et dans lequel le système isolant comprend au moins une matrice polymère dans laquelle sont dispersées des particules solides de polymère réticulé.

A des fins de concision, la couche du système isolant comprenant les particules solides de polymère réticulé selon l'invention est désigné dans la présente description par le terme générique de « couche polymère composite ».

De façon inattendue, les inventeurs ont maintenant mis en évidence que des particules solides à base de polymères réticulés, notamment à base de XLPE, obtenues par exemple par broyage de matériaux issus des rebuts de préparation de couches réticulées de câbles et/ou de couches réticulées isolantes de câbles en fin de vie, s'avèrent pouvoir être employées à titre de charges solides particulaires dans des couches isolantes de câbles électriques ou d'accessoires de câbles électriques.

L'invention met à profit cet intérêt des particules solides à base de polymères réticulés. Dans ce cadre, l'invention permet notamment la préservation et/ou la protection de l'environnement en fournissant un débouché de valorisation de matériaux polymères réticulés qui, d'un état de déchet sans valeur intrinsèque, voire même associé à un coût pour son traitement (inertage, incinération), passent du fait de l'invention à un état de produit à haute valeur ajoutée.

Dans le câble selon l'invention, la couche polymère isolante présente dans le système isolant comprend les particules de polymère réticulé à titre de charge solide. Ces particules comprennent (voire sont entièrement constituée par) au moins un matériau polymère réticulé. Avantageusement, il s'agit de particules d'un matériau polymère recyclé, qui sont généralement issues d'un broyage et/ou micronisation de déchets ou rebuts à base d'un ou plusieurs polymères réticulés (notamment des rebuts obtenus lors de la préparation d'un câble électrique ou bien des déchets de câbles en fin de vie).

Quelle que soit leur nature exacte, les particules de polymère réticulé sont dispersées dans le volume -notamment dans tout le volume- de la matrice polymère de la couche. Cette dispersion dans le volume de la matrice polymère est de préférence homogène.

Par ailleurs, les particules de charge solide qui sont dispersés dans la matrice ont de préférence une taille médiane d50 en masse et/ou une taille médiane d50 en volume comprise entre 10 et 1000 µm, cette taille médiane d50 en masse et/ou en volume pouvant typiquement être comprise entre 10 et 700 µm et par exemple entre 10 et 600 µm et par exemple entre 10 µm et 500 µm ou bien pouvant typiquement être comprise entre 50 et 700 µm et par exemple entre 50 et 600 µm et par exemple entre 50 et 500 µm et par exemple entre 100 µm et 500 µm et par exemple entre 400 et 500 µm et par exemple entre 420 et 460 µm.

Dans la présente description :
- l'expression « âme conductrice » d'un câble électrique, désigne un élément allongé électriquement conducteur s'étendant sensiblement axialement le long de l'axe longitudinal d'un câble électrique ou un ensemble de tels éléments allongés électriquement conducteurs (qui peuvent être rassemblés par exemple sous la forme d'un toron). Un élément allongé électriquement conducteur présent dans l'âme conductrice comprend typiquement un matériau support du courant électrique, par exemple un métal, notamment de cuivre ou d'aluminium ou l'un de leurs alliages. Le matériau constitutif d'un élément allongé électriquement conducteur présent dans l'âme conductrice présente de préférence une résistivité à 20°C inférieure ou égale à 1,7 x 10⁻⁶ Ω.m environ, et de préférence inférieure ou égale à 1,7 x 10⁻⁸ Ω.m environ,
- les termes « sous », « dessous » définissent la position relative d'un premier élément ou d'une première couche polymère par rapport à un deuxième élément ou une deuxième couche polymère, le premier élément ou la première couche polymère située sous/dessous le deuxième élément ou deuxième couche polymère étant positionné(e) entre le deuxième élément ou deuxième couche polymère et l'âme conductrice. Les termes « sous » et « dessous » s'entendent donc selon le sens axial du câble en partant de l'âme conductrice comme référence : lorsque la description fait référence à une première couche déposée sur l'âme conductrice et sous une deuxième couche, cela signifie que la première couche entoure l'âme et que la deuxième couche entoure la première couche (et l'âme qu'elle contient. Les termes « sous » et « dessous » indiquent des positions relatives et n'implique pas qu'une couche déposée sous une autre est nécessairement en contact physique direct avec celle-ci.
- l'expression « autour de l'âme conductrice », désigne la position relative d'un élément, notamment d'une couche polymère par rapport à l'âme conductrice, l'élément ou la couche polymère couvrant l'âme conductrice sans toutefois que cet élément ou cette couche polymère soit nécessairement en contact direct avec l'âme conductrice. Un ou plusieurs élément(s) ou couche(s) peuvent être interposées ou non entre l'âme conductrice et la couche polymère,
- l'expression « couvrant directement » définit la position d'un premier élément ou d'une première couche polymère par rapport à un deuxième élément ou une deuxième couche polymère, selon laquelle le premier élément ou la première couche polymère est directement au-dessus du deuxième élément ou de la deuxième couche polymère, sans qu'aucun autre élément ni aucune autre couche polymère ne soit interposé(e) entre le premier élément ou la première couche polymère et le deuxième élément ou la deuxième couche polymère.

Dans tout le texte, les expressions « matériau recyclé »,
« matériau polymère recyclé » et « matériau polymère réticulé recyclé » désignent un matériau, un polymère et un polymère réticulé valorisés à partir de déchet(s) de post-consommation et/ou de déchet(s) industriel(s) et qui ne constitue donc plus un déchet. On entend par « déchet de post-consommation », un objet devenu obsolète ou en fin de vie, c'est-à-dire un objet ayant achevé un cycle d'utilisation ou cycle de vie, et qui est destiné à être éliminé. On entend par « déchet industriel » un rebut de production qui n'aura donc pas complété un tel cycle d'utilisation. Selon l'invention, un déchet industriel peut être un déchet de production ou une purge d'extrusion.

La taille des particules de la charge solide employée selon l'invention peut être évaluée préalablement à la dispersion de ladite charge solide dans la matrice polymère, par toute méthode connue en soi. La taille médiane (d50) en masse des particules de la composition de particules destinée à former ladite charge solide est déterminée par tamisages successifs, notamment par tamisages successifs sur des tamis vibrant et de maille décroissante et analyse en masse ou en volume des particules retenues sur chacun des tamis, la taille médiane (d50) en masse ou en volume des particules de la composition de particules destinée à former ladite charge solide correspondant à une taille de particule telle que 50% (en masse ou en volume) des particules de la composition présentent une taille supérieure ou égale à la taille médiane et 50% (en masse ou en volume) des particules de la composition présentent une taille inférieure ou égale à la taille médiane. Selon certains modes de réalisation, la taille en nombre, en masse ou en volume des particules de la composition de particules destinée à former ladite charge solide peut être déterminée par diffraction laser. Selon certains modes de réalisation, la taille en nombre, en masse ou en volume des particules de la composition de particules destinée à former ladite charge solide peut être déterminée par analyse morpho-granulométrique par imagerie 2D avec reconnaissance d'image.

De préférence, pour déterminer une taille médiane (d50) en masse, on emploie selon l'invention la méthode précitée des tamisages successifs (méthode dite « des tamis »).

Lorsqu'il s'agit de déterminer une taille médiane en volume, la méthode préférée est celle passant par l'analyse de la granulométrie, notamment par les méthodes précitées.

La taille d10 en masse ou en volume des particules de la composition de particules destinée à former ladite charge solide correspond à une taille de particule telle que 90% (en masse ou en volume) des particules de la composition présentent une taille supérieure ou égale à la taille d10 et 10% (en masse ou en volume) des particules de la composition présentent une taille inférieure ou égale à la taille d10.

La taille d90 en masse ou en volume des particules de la composition de particules destinée à former ladite charge solide correspond à une taille de particule telle que 10% (en masse ou en volume) des particules de la composition présentent une taille supérieure ou égale à la taille d90 et 90% (en masse ou en volume) des particules de la composition présentent une taille inférieure ou égale à la taille d90.

La taille d99 en masse ou en volume des particules de la composition de particules destinée à former ladite charge solide correspond à une taille de particule telle que 1% (en masse ou en volume) des particules de la composition présentent une taille supérieure ou égale à la taille d99 et 99% (en masse ou en volume) des particules de la composition présentent une taille inférieure ou égale à la taille d99.

Selon certains modes de réalisation, au moins 100%, ou au moins 90%, ou au moins 80%, ou au moins 70%, ou au moins 60%, ou au moins 50%, ou au moins 40%, ou au moins 30%, ou au moins 20%, ou au moins 10% en masse ou en volume, des particules d'au moins un matériau polymère réticulé présentent une plus grande dimension comprise entre 10 µm et 1000 µm.

Selon certains modes de réalisation, 100%, ou au moins 90%, ou au moins 80%, ou au moins 70%, ou au moins 60%, ou au moins 50%, ou au moins 40%, ou au moins 30%, ou au moins 20%, ou au moins 10% en masse ou en volume, des particules d'au moins un matériau polymère réticulé présentent deux dimensions supérieures à une plus petite dimension, les deux dimensions supérieures à la plus petite dimension étant chacune comprise entre 10 µm et 1000 µm, les deux dimensions supérieures à la plus petite dimension s'étendant selon des directions orthogonales entre elles et orthogonales à la direction de la plus petite dimension.

Selon certains modes de réalisation, au moins 100%, ou au moins 90%, ou au moins 80%, ou au moins 70%, ou au moins 60%, ou au moins 50%, ou au moins 40%, ou au moins 30%, ou au moins 20%, ou au moins 10% en masse ou en volume, des particules d'au moins un matériau polymère réticulé présentent trois dimensions s'étendant selon trois directions orthogonales entre elles, les trois dimensions étant comprises entre 10 µm et 1000 µm, notamment entre 50 et 500 µm, et par exemple entre 100 et 500 µm.

Selon certains modes de réalisation, les particules d'au moins un matériau polymère réticulé sont des particules micronisées.

Selon certains modes de réalisation, ladite charge solide est formée de particules de taille médiane d50 en masse et/ou en volume au plus égales à 1000 µm. Selon certains modes de réalisation, ladite charge solide est formée de particules de taille médiane d50 en masse et/ou en volume, comprise entre 10 et 1000 µm, cette taille médiane d50 en masse et/ou en volume pouvant typiquement être comprise entre 10 et 700 µm et par exemple entre 10 et 600 µm et par exemple entre 10 µm et 500 µm ou bien pouvant typiquement être comprise entre 50 et 700 µm et par exemple entre 50 et 600 µm et par exemple entre 50 et 500 µm et par exemple entre 100 µm et 500 µm et par exemple entre 400 et 500 µm et par exemple entre 420 et 460 µm. Selon certains modes de réalisation, ladite charge solide est formée de particules de taille médiane d50 en masse et/ou en volume, comprise entre 100 µm et 200 µm. Selon certains modes de réalisation, ladite charge solide est formée de particules de taille médiane d50 en masse et/ou en volume, comprise entre 200 µm et 300 µm. Selon certains modes de réalisation, ladite charge solide est formée de particules de taille médiane d50 en masse et/ou en volume, comprise entre 300 µm et 400 µm. Selon certains modes de réalisation, ladite charge solide est formée de particules de taille médiane d50 en masse et/ou en volume, comprise entre 400 µm et 500 µm. Selon certains modes de réalisation, ladite charge solide est formée de particules de taille médiane d50 en masse et/ou en volume, comprise entre 500 µm et 600 µm. Selon ces modes de réalisation, ladite charge solide est formée de particules de taille médiane d90 en masse et/ou en volume, de l'ordre de 500 µm. Selon ces modes de réalisation, ladite charge solide est formée de particules de taille médiane d99 en masse et/ou en volume, de l'ordre de 630 µm. Selon certains modes de réalisation, ladite charge solide est formée de particules de taille médiane d50 en masse et/ou en volume, comprise entre 500 µm et 600 µm. Selon certains modes de réalisation, ladite charge solide est formée de particules de taille médiane d50 en masse et/ou en volume, comprise entre 600 µm et 700 µm. Selon certains modes de réalisation, ladite charge solide est formée de particules de taille médiane d50 en masse et/ou en volume, comprise entre 700 µm et 800 µm. Selon certains modes de réalisation, ladite charge solide est formée de particules de taille médiane d50 en masse et/ou en volume, comprise entre 800 µm et 900 µm. Selon certains modes de réalisation, ladite charge solide est formée de particules de taille médiane d50 en masse et/ou en volume, comprise entre 900 µm et 1000 µm.

La taille des particules de ladite charge solide dispersée dans la matrice polymère de la couche polymère composite peut être déterminée par toute méthode connue en elle-même. La taille de particules d'au moins un matériau polymère réticulé de ladite charge solide de la couche polymère composite peut être évaluée par observation visuelle directe d'au moins une coupe (transversale, longitudinale ou en biseau) du système isolant du câble électrique ou de l'accessoire pour câble électrique ou au moyen d'un dispositif optique de grossissement. Elle peut être mesurée de manière indirecte par une acquisition d'images numériques d'une telle coupe et analyse des images acquises. Une taille médiane en nombre peut être déduite de ces mesures.

Selon certains modes de réalisation, au moins 50%, ou au moins 55% ou au moins 60%, ou au moins 65%, ou au moins 70%, ou au moins 75%, ou au moins 80%, ou au moins 85%, ou au moins 90%, ou au moins 95% ou au moins 96%, ou au moins 97% ou au moins 98% ou au moins 99%, notamment 100% en nombre, des particules d'au moins un matériau polymère réticulé de ladite charge solide de la couche polymère composite sont des particules présentant une plus grande dimension comprise entre 10 µm et 1000 µm, notamment entre 50 et 500 µm, et par exemple entre 100 et 500 µm.

Selon certains modes de réalisation, au moins 50%, ou au moins 55% ou au moins 60%, ou au moins 65%, ou au moins 70%, ou au moins 75%, ou au moins 80%, ou au moins 85%, ou au moins 90%, ou au moins 95% ou au moins 96%, ou au moins 97% ou au moins 98% ou au moins 99%, notamment 100% en nombre, des particules d'au moins un matériau polymère réticulé de ladite charge solide de la couche polymère composite sont des particules présentant une plus grande dimension comprise entre 10 µm et 500 µm.

Selon certains modes de réalisation, au moins 50%, ou au moins 55% ou au moins 60%, ou au moins 65%, ou au moins 70%, ou au moins 75%, ou au moins 80%, ou au moins 85%, ou au moins 90%, ou au moins 95% ou au moins 96%, ou au moins 97% ou au moins 98% ou au moins 99%, notamment 100% en nombre, des particules d'au moins un matériau polymère réticulé de ladite charge solide de la couche polymère composite sont des particules présentant une plus grande dimension comprise entre 10 µm et 50 µm.

Selon certains modes de réalisation, au moins 50%, ou au moins 55% ou au moins 60%, ou au moins 65%, ou au moins 70%, ou au moins 75%, ou au moins 80%, ou au moins 85%, ou au moins 90%, ou au moins 95% ou au moins 96%, ou au moins 97% ou au moins 98% ou au moins 99%, notamment 100% en nombre, des particules d'au moins un matériau polymère réticulé de ladite charge solide de la couche polymère composite sont des particules présentant une plus grande dimension comprise entre 50 µm et 100 µm.

Selon certains modes de réalisation, au moins 50%, ou au moins 55% ou au moins 60%, ou au moins 65%, ou au moins 70%, ou au moins 75%, ou au moins 80%, ou au moins 85%, ou au moins 90%, ou au moins 95% ou au moins 96%, ou au moins 97% ou au moins 98% ou au moins 99%, notamment 100% en nombre, des particules d'au moins un matériau polymère réticulé de ladite charge solide de la couche polymère composite sont des particules présentant une plus grande dimension comprise entre 100 µm et 150 µm.

Selon certains modes de réalisation, au moins 50%, ou au moins 55% ou au moins 60%, ou au moins 65%, ou au moins 70%, ou au moins 75%, ou au moins 80%, ou au moins 85%, ou au moins 90%, ou au moins 95% ou au moins 96%, ou au moins 97% ou au moins 98% ou au moins 99%, notamment 100% en nombre, des particules d'au moins un matériau polymère réticulé de ladite charge solide de la couche polymère composite sont des particules présentant une plus grande dimension comprise entre 150 µm et 200 µm.

Selon certains modes de réalisation, au moins 50%, ou au moins 55% ou au moins 60%, ou au moins 65%, ou au moins 70%, ou au moins 75%, ou au moins 80%, ou au moins 85%, ou au moins 90%, ou au moins 95% ou au moins 96%, ou au moins 97% ou au moins 98% ou au moins 99%, notamment 100% en nombre, des particules d'au moins un matériau polymère réticulé de ladite charge solide de la couche polymère composite sont des particules présentant une plus grande dimension comprise entre 200 µm et 250 µm.

Selon certains modes de réalisation, au moins 50%, ou au moins 55% ou au moins 60%, ou au moins 65%, ou au moins 70%, ou au moins 75%, ou au moins 80%, ou au moins 85%, ou au moins 90%, ou au moins 95% ou au moins 96%, ou au moins 97% ou au moins 98% ou au moins 99%, notamment 100% en nombre, des particules d'au moins un matériau polymère réticulé de ladite charge solide de la couche polymère composite sont des particules présentant une plus grande dimension comprise entre 250 µm et 300 µm.

Selon certains modes de réalisation, au moins 50%, ou au moins 55% ou au moins 60%, ou au moins 65%, ou au moins 70%, ou au moins 75%, ou au moins 80%, ou au moins 85%, ou au moins 90%, ou au moins 95% ou au moins 96%, ou au moins 97% ou au moins 98% ou au moins 99%, notamment 100% en nombre, des particules d'au moins un matériau polymère réticulé de ladite charge solide de la couche polymère composite sont des particules présentant une plus grande dimension comprise entre 300 µm et 350 µm.

Selon certains modes de réalisation, au moins 50%, ou au moins 55% ou au moins 60%, ou au moins 65%, ou au moins 70%, ou au moins 75%, ou au moins 80%, ou au moins 85%, ou au moins 90%, ou au moins 95% ou au moins 96%, ou au moins 97% ou au moins 98% ou au moins 99%, notamment 100% en nombre, des particules d'au moins un matériau polymère réticulé de ladite charge solide de la couche polymère composite sont des particules présentant une plus grande dimension comprise entre 350 µm et 400 µm.

Selon certains modes de réalisation, au moins 50%, ou au moins 55% ou au moins 60%, ou au moins 65%, ou au moins 70%, ou au moins 75%, ou au moins 80%, ou au moins 85%, ou au moins 90%, ou au moins 95% ou au moins 96%, ou au moins 97% ou au moins 98% ou au moins 99%, notamment 100% en nombre, des particules d'au moins un matériau polymère réticulé de ladite charge solide de la couche polymère composite sont des particules présentant une plus grande dimension comprise entre 400 µm et 450 µm.

Selon certains modes de réalisation, au moins 50%, ou au moins 55% ou au moins 60%, ou au moins 65%, ou au moins 70%, ou au moins 75%, ou au moins 80%, ou au moins 85%, ou au moins 90%, ou au moins 95% ou au moins 96%, ou au moins 97% ou au moins 98% ou au moins 99%, notamment 100% en nombre, des particules d'au moins un matériau polymère réticulé de ladite charge solide de la couche polymère composite sont des particules présentant une plus grande dimension comprise entre 450 µm et 500 µm.

Selon certains modes de réalisation, au moins 50%, ou au moins 55% ou au moins 60%, ou au moins 65%, ou au moins 70%, ou au moins 75%, ou au moins 80%, ou au moins 85%, ou au moins 90%, ou au moins 95% ou au moins 96%, ou au moins 97% ou au moins 98% ou au moins 99%, notamment 100% en nombre, des particules d'au moins un matériau polymère réticulé de ladite charge solide de la couche polymère composite sont des particules présentant une plus grande dimension comprise entre 50 µm et 400 µm.

Selon certains modes de réalisation, au moins 50%, ou au moins 55% ou au moins 60%, ou au moins 65%, ou au moins 70%, ou au moins 75%, ou au moins 80%, ou au moins 85%, ou au moins 90%, ou au moins 95% ou au moins 96%, ou au moins 97% ou au moins 98% ou au moins 99%, notamment 100% en nombre, des particules d'au moins un matériau polymère réticulé de ladite charge solide de la couche polymère composite sont des particules présentant une plus grande dimension comprise entre 100 µm et 300 µm.

Selon certains modes de réalisation, les particules de la charge solide à base de matériau polymère réticulé sont des particules présentant une morphologie relativement isotrope. Dans ce cadre les les particules de la charge solide à base de matériau polymère réticulé peuvent par exemple présenter, selon trois directions orthogonales entre elles (deux à deux), des dimensions telles que tout rapport de deux dimensions selon deux directions orthogonales est compris entre 10 :1 et 10 :1, et plus avantageusement entre 1 :5 et 5 :1, notamment entre 1 :4 et 4 :1, par exemple entre 1 :3 et 3 :1, voire entre 1 :2 et 2 :1.

Selon certains modes de réalisation, les particules de la charge solide à base de matériau polymère réticulé sont toutes des particules présentant une morphologie sensiblement isotrope de ce type.

Selon certains modes de réalisation, les particules de la charge solide à base de matériau polymère réticulé sont des particules présentant une fraction de gel supérieure à 45% et par exemple comprise entre 50 et 90% et par exemple comprise entre 50 et 80%.

Selon certains modes de réalisation, les particules solides de polymère réticulé assurant le rôle de charge solide dans le câble de l'invention ne comprennent pas de particules lamellaires, les particules lamellaires présentant :
- deux dimensions, dites dimensions orthogonales, principales s'étendant selon deux directions principales orthogonales entre elles et orthogonales à une troisième direction des particules,
- une plus petite dimension, notamment une épaisseur, transversale s'étendant selon la troisième direction des particules,
   lesdites dimensions orthogonales étant chacune supérieure à ladite troisième dimension (ou épaisseur), et,
- deux rapports, dits facteurs de forme, entre chacune des deux dimensions orthogonales et ladite troisième dimension (ou épaisseur), au moins un desdits facteurs de forme étant supérieur à 10.

Selon certains modes de réalisation, les particules solides de polymère réticulé assurant le rôle de charge solide dans le câble de l'invention sont à base d'au moins un matériau polymère réticulé, avantageusement recyclé, qui est de préférence choisi dans le groupe consistant en :
- les polyéthylènes réticulés (XLPE),
- les copolymères éthylène-propylène, d'éthylène et de propène (« Ethylene Propylene Rubber », EPR) réticulés, notamment des copolymères d'éthylène et de propène réticulés par des peroxydes,
- les polyéthylènes chlorés (CPE) réticulés,
- les silicones réticulés,
- les copolymères d'éthylène et d'acétate de vinyle (EVA, « Ethylene-Vinyl Acetate ») réticulés,
- les copolymères d'éthylène et de vinyle (EVM, Ethylène-Vinyle Monomère) réticulés ,
- les copolymères de butadiène et d'acrylonitrile (NBR, « Nitrile Butadiene Rubber ») réticulés,
- les terpolymères d'éthylène, de propène et de diène (Ethylène-Propylène-Diène Monomère, EPDM) réticulés, notamment des terpolymères d'éthylène, de propène et de diène (Ethylène-Propylène-Diène Monomère, EPDM) réticulés par un peroxyde ou par le soufre,
- les mélanges réticulés de ces polymères, en toutes proportions.

Selon certains modes de réalisation, ledit au moins un matériau polymère réticulé est un polyéthylène réticulé (XLPE) ou un terpolymère d'éthylène, de propène et de diène (Ethylène-Propylène-Diène Monomère, EPDM) qui peuvent par exemple être réticulés par un peroxyde.

Selon certains modes de réalisation, le matériau polymère réticulé de la charge solide est réticulé par un agent de réticulation tel que qu'un peroxyde, par exemple le peroxyde de dicumyle, le peroxyde de di-tert-butyle, l'hydroperoxyde de cumène ou le 1,3-bis(tert-butylperoxyisopropyl)benzène.

Selon certains modes de réalisation, ledit au moins un matériau polymère réticulé est un matériau polymère réticulé par un agent chimique de réticulation, tel que le soufre, un peroxyde ou un silane ou par radiation. Selon certains modes de réalisation, au moins un matériau polymère réticulé est un copolymère ou un terpolymère oléfinique comprenant au moins un monomère de copolymérisation porteur d'un groupement de réticulation.

Selon certains modes de réalisation, la couche polymère composite du câble électrique selon l'invention est formée par application - notamment par extrusion- d'une composition polymère composite comprenant une quantité desdites particules solides choisie pour que lesdites particules solides soient présentes dans la composition polymère composite avec une proportion massique comprise entre 1% et 50%. On entend par proportion massique, le rapport en pourcentage de la masse de ladite charge solide sur la masse de composition polymère composite.

Selon certains de ces modes de réalisation préférentiels, la couche polymère composite est formée par application d'une composition polymère composite comprenant une quantité de ladite charge solide choisie pour que ladite charge solide soit présente dans la composition polymère composite avec une proportion massique comprise entre 1% et 25%.

Selon certains de ces modes de réalisation préférentiels, la couche polymère composite est formée par application d'une composition polymère composite comprenant une quantité de ladite charge solide choisie pour que ladite charge solide soit présente dans la composition polymère composite avec une proportion massique comprise entre 1% et 5%, notamment 1%, 2%, 3%, 4% ou 5%.

Selon certains de ces modes de réalisation préférentiels, la couche polymère composite est formée par application d'une composition polymère composite comprenant une quantité de ladite charge solide choisie pour que ladite charge solide soit présente dans la composition polymère composite avec une proportion massique comprise entre 5% et 10%, notamment 5%, 6%, 7%, 8%, 9% ou 10%.

Selon certains de ces modes de réalisation préférentiels, la couche polymère composite est formée par application d'une composition polymère composite comprenant une quantité de ladite charge solide choisie pour que ladite charge solide soit présente dans la composition polymère composite avec une proportion massique comprise entre 10% et 15%, notamment 10%, 11%, 12%, 13%, 14% ou 15%.

Selon certains de ces modes de réalisation préférentiels, la couche polymère composite est formée par application d'une composition polymère composite comprenant une quantité de ladite charge solide choisie pour que ladite charge solide soit présente dans la composition polymère composite avec une proportion massique comprise entre 15% et 20%, notamment 15%, 16%, 17%, 18%, 19% ou 20%.

Selon certains de ces modes de réalisation préférentiels, la couche polymère composite est formée par application d'une composition polymère composite comprenant une quantité de ladite charge solide choisie pour que ladite charge solide soit présente dans la composition polymère composite avec une proportion massique comprise entre 20% et 25%, notamment 20%, 21%, 22%, 23%, 24% ou 25%.

Selon certains de ces modes de réalisation préférentiels, la couche polymère composite est formée par application d'une composition polymère composite comprenant une quantité de ladite charge solide choisie pour que ladite charge solide soit présente dans la composition polymère composite avec une proportion massique comprise entre 25% et 30%, notamment 25%, 26%, 27%, 28%, 29% ou 30%.

Selon certains de ces modes de réalisation préférentiels, la couche polymère composite est formée par application d'une composition polymère composite comprenant une quantité de ladite charge solide choisie pour que ladite charge solide soit présente dans la composition polymère composite avec une proportion massique comprise entre 30% et 35%, notamment 30%, 31%, 32%, 33%, 34% ou 35%.

Selon certains de ces modes de réalisation préférentiels, la couche polymère composite est formée par application d'une composition polymère composite comprenant une quantité de ladite charge solide choisie pour que ladite charge solide soit présente dans la composition polymère composite avec une proportion massique comprise entre 35% et 40%, notamment 35%, 36%, 37%, 38%, 39% ou 40%.

Selon certains de ces modes de réalisation préférentiels, la couche polymère composite est formée par application d'une composition polymère composite comprenant une quantité de ladite charge solide choisie pour que ladite charge solide soit présente dans la composition polymère composite avec une proportion massique comprise entre 40% et 45%, notamment 40%, 41%, 42%, 43%, 44% ou 45%.

Selon certains de ces modes de réalisation préférentiels, la couche polymère composite est formée par application d'une composition polymère composite comprenant une quantité de ladite charge solide choisie pour que ladite charge solide soit présente dans la composition polymère composite avec une proportion massique comprise entre 45% et 50%, notamment 45%, 46%, 47%, 48%, 49% ou 50%.

Selon certains de ces modes de réalisation, la couche polymère composite est formée par application d'une composition polymère composite comprenant une quantité de ladite charge solide choisie pour que ladite charge solide soit présente dans la composition polymère composite avec une proportion massique supérieure à 50%.

Selon certains modes de réalisation, la couche polymère composite est une couche polymère composite électriquement isolante. On entend par « couche polymère composite électriquement isolante » ou « couche électriquement isolante », une couche polymère composite dont la conductivité électrique peut être d'au plus 1.10-8 S/m (siemens par mètre) environ, notamment d'au plus 1.10-9 S/m (siemens par mètre) environ, de préférence d'au plus d'au plus 1.10-10 S/m (Siemens par mètre) environ, plus préférentiellement d'au plus 1.10-12 S/m (siemens par mètre) environ, mesurée à 25°C en courant continu.

Selon certains modes de réalisation, la matrice polymère de la couche polymère composite est une matrice polymère électriquement isolante thermoplastique. Le matériau polymère formant la matrice polymère électriquement isolante thermoplastique de la couche polymère composite peut être un homopolymère ou un copolymère ou un terpolymère présentant des propriétés thermoplastiques. Un tel matériau polymère peut être choisi dans le groupe formé des polyoléfines, des polyuréthanes, des polyamides, des polyesters, des polyvinyles ou des polymères halogénés tels que des polymères fluorés (e.g. polytétrafluoroéthylène PTFE) ou des polymères chlorés (e.g. polychlorure de vinyle, PVC). Une telle polyoléfine peut être choisie parmi les polymères d'éthylène et les polymères de propylène. A titre d'exemples de polymères d'éthylène, on peut citer les polyéthylènes linéaires basse densité (LLDPE), les polyéthylènes basse densité (LDPE), les polyéthylènes de moyenne densité (MDPE), les polyéthylènes haute densité (HDPE).

Une telle polyoléfine peut être choisies parmi les copolymères d'éthylène et d'acétate de vinyle (EVA), les copolymères d'éthylène et d'acrylate de butyle (EBA), les copolymères d'éthylène et d'acrylate de méthyle (EMA), les copolymères d'éthylène et de 2-hexyléthyl acrylate (2HEA), les copolymères d'éthylène et d'alpha-oléfines tels que par exemple les polyéthylène-octène (PEO), les copolymères d'éthylène et de propylène (EPR), les copolymères d'éthylène/éthyle acrylate (EEA), ou les terpolymères d'éthylène et de propylène (EPT) tels que par exemple les terpolymères d'éthylène-propylène-diène monomère (EPDM).

Selon certains modes de réalisation, la matrice polymère de la couche polymère composite est une matrice polymère électriquement isolante réticulée. Le matériau polymère formant la matrice polymère électriquement isolante réticulée de la couche polymère composite peut être une polyoléfine réticulée. Il peut s'agir d'un homopolymère d'éthylène réticulé tel que, par exemple un polyéthylène de haute densité (HDPE) réticulé, un polyéthylène de moyenne densité (MDPE) réticulé, un polyéthylène de basse densité (LDPE) réticulé, un polyéthylène linéaire de basse densité (LLDPE) réticulé ou un polyéthylène de très basse densité (VLDPE) réticulé ou un mélange de tels polymères.

Il peut s'agir d'un copolymère réticulé d'éthylène et d'au moins une α-oléfine à chaine courte, telle que par exemple le propène, le but-1-ène, l'hex-1-ène et/ou l'oct-1-ène. Il peut s'agir d'un copolymère d'éthylène et d'alpha-oléfine tel qu'un copolymère d'éthylène et d'octène (PEO) ou un copolymère d'éthylène et de butène (PEB). Il peut s'agir d'un copolymère LLDPE (« Linear Low-Density PolyEthylene ») réticulé. Il peut s'agir d'un élastomère éthylène-propylène (EPR), d'un terpolymère éthylène-propylène-diène monomère (EPDM), d'un copolymère d'éthylène et d'un ester vinylique, d'un copolymère d'éthylène-acétate de vinyle (EVA), d'éthylène-acétate de butyle (EBA) et d'éthylène-acétate d'éthyle (EEA). Il peut s'agir d'un copolymère d'éthylène et d'acrylate tel qu'un copolymère d'éthylène et d'acrylate de butyle (EBA) ou d'un copolymère d'éthylène et d'acrylate de méthyle (EMA). Il peut s'agir d'un polymère d'oléfine fonctionnalisé, de polypropylène, d'un copolymère de propylène et l'un des mélanges de ces polymères, homopolymères, copolymère et/ou terpolymères.

Selon certains modes de réalisation, le matériau polymère formant la matrice polymère électriquement isolante réticulée de la couche polymère composite est réticulé par un agent de réticulation tel que qu'un peroxyde, par exemple le peroxyde de dicumyle, le peroxyde de di-tert-butyle, l'hydroperoxyde de cumène ou le 1,3-bis(tert-butylperoxyisopropyl)benzène.

Selon certains modes de réalisation, la couche polymère composite est une couche polymère composite semi-conductrice. On entend par « couche polymère composite semi-conductrice » ou « couche semi-conductrice » une couche dont la conductivité électrique peut être strictement supérieure à 1.10-8 S/m (Siemens par mètre), de préférence d'au moins 1.10-3 S/m, et de préférence peut être inférieure à 1.103 S/m, mesurée à 25°C en courant continu.

Dans ces modes de réalisation, la couche polymère composite semi-conductrice comprend un additif d'accroissement de la conductivité tel que du noir de carbone, des nanotubes de carbone, du graphène ou l'un de leurs mélanges.

Selon certains modes de réalisation, la matrice polymère de la couche polymère composite est une matrice polymère semi-conductrice thermoplastique. Le matériau polymère formant la matrice polymère semi-conductrice thermoplastique de la couche polymère composite peut être un homopolymère ou un copolymère ou un terpolymère présentant des propriétés thermoplastiques. Un tel matériau polymère peut être choisi dans le groupe formé des polyoléfines, des polyuréthanes, des polyamides, des polyesters, des polyvinyles ou des polymères halogénés tels que des polymères fluorés (e.g. polytétrafluoroéthylène PTFE) ou des polymères chlorés (e.g. polychlorure de vinyle, PVC). Une telle polyoléfine peut être choisie parmi les polymères d'éthylène et les polymères de propylène. A titre d'exemples de polymères d'éthylène, on peut citer les polyéthylènes linéaires basse densité (LLDPE), les polyéthylènes basse densité (LDPE), les polyéthylènes de moyenne densité (MDPE), les polyéthylènes de haute densité (HDPE).

Une telle polyoléfine peut être choisies parmi les copolymères d'éthylène et d'acétate de vinyle (EVA), les copolymères d'éthylène et d'acrylate de butyle (EBA), les copolymères d'éthylène et d'acrylate de méthyle (EMA), les copolymères d'éthylène et de 2-hexyléthyl acrylate (2HEA), les copolymères d'éthylène et d'alpha-oléfines tels que par exemple les polyéthylène-octène (PEO), les copolymères d'éthylène et de propylène (EPR), les copolymères d'éthylène/éthyle acrylate (EEA), ou les terpolymères d'éthylène et de propylène (EPT) tels que par exemple les terpolymères d'éthylène-propylène-diène monomère (EPDM).

Selon certains modes de réalisation, la matrice polymère de la couche polymère composite est une matrice polymère semi-conductrice réticulée. Le matériau polymère formant la matrice polymère semi-conductrice réticulée de la couche polymère composite peut être une polyoléfine réticulée. Il peut s'agir d'un homopolymère d'éthylène réticulé tel que, par exemple un polyéthylène de haute densité (HDPE) réticulé, un polyéthylène de moyenne densité (MDPE) réticulé, un polyéthylène de basse densité (LDPE) réticulé, un polyéthylène linéaire de basse densité (LLDPE) réticulé ou un polyéthylène de très basse densité (VLDPE) réticulé ou un mélange de tels polymères.

Il peut s'agir d'un copolymère réticulé d'éthylène et d'au moins une α-oléfine à chaine courte, telle que par exemple le propène, le but-1-ène, l'hex-1-ène et/ou l'oct-1-ène. Il peut s'agir d'un copolymère d'éthylène et d'alpha-oléfine tel qu'un copolymère d'éthylène et d'octène (PEO) ou un copolymère d'éthylène et de butène (PEB). Il peut s'agir d'un copolymère LLDPE (« Linear Low-Density PolyEthylene ») réticulé. Il peut s'agir d'un élastomère éthylène-propylène (EPR), d'un terpolymère éthylène-propylène-diène monomère (EPDM), d'un copolymère d'éthylène et d'un ester vinylique, d'un copolymère d'éthylène-acétate de vinyle (EVA), d'éthylène-acétate de butyle (EBA) et d'éthylène-acétate d'éthyle (EEA). Il peut s'agir d'un copolymère d'éthylène et d'acrylate tel qu'un copolymère d'éthylène et d'acrylate de butyle (EBA) ou d'un copolymère d'éthylène et d'acrylate de méthyle (EMA). Il peut s'agir d'un polymère d'oléfine fonctionnalisé, de polypropylène, d'un copolymère de propylène et l'un des mélanges de ces polymères, homopolymères, copolymère et/ou terpolymères.

Selon ces modes de réalisation, le matériau polymère formant la matrice polymère semi-conductrice réticulée de la couche polymère composite est réticulé par un agent de réticulation tel que qu'un peroxyde, par exemple le peroxyde de dicumyle, le peroxyde de di-tert-butyle, l'hydroperoxyde de cumène ou le 1,3-bis(tert-butylperoxyisopropyl)benzène.

Selon certains modes de réalisation, les particules micronisées de ladite charge solide sont des particules micronisées par broyage et/ou micronisation -notamment micronisation à froid- d'un déchet comprenant au moins un matériau polymère réticulé. Selon certains modes de réalisation, la micronisation est une micronisation par cisaillement -par exemple réalisée au moyen d'un microniseur à disque au moyen d'un microniseur à broches ou au moyen d'un microniseur à couteaux-, une micronisation par impact, par exemple réalisée dans un microniseur à marteaux, ou une micronisation par jet d'air. Un tel broyage et/ou micronisation d'un déchet comprenant au moins un matériau polymère réticulé est adapté pour former une poudre de particules micronisées adaptée pour être incorporée dans, notamment pour constituer, ladite charge solide.

Selon certains modes de réalisation, les particules micronisées de ladite charge solide sont des particules micronisées par broyage et/ou micronisation d'un matériau polymère réticulé recyclé préalablement refroidi à une température inférieure à sa température de transition vitreuse. Selon certains modes de réalisation, le matériau polymère réticulé recyclé est préalablement refroidi dans l'azote liquide.

Ainsi, les particules sont obtenues préférentiellement par broyage et/ou micronisation et non par une méthode de régénération thermomécanique. Les particules peuvent notamment être obtenues en travaillant à température ambiante et/ou sans chauffage du matériau polymère réticulé recyclé. Les particules sont ainsi incorporées sous forme d'une poudre dans la composition.

Selon certains modes de réalisation, la couche polymère composite est une couche polymère composite isolante basse tension dans laquelle la matrice polymère est une base de terpolymère d'éthylène-propylène-diène monomère (EPDM) réticulé par un peroxyde et dans laquelle ladite charge solide comprend des particules minérales, notamment des particules de craie (CaCO3) de diamètre moyen de l'ordre de 1 µm. Selon ces modes de réalisation, les particules d'au moins un matériau polymère réticulé, avantageusement recyclé, notamment les particules de polyéthylène réticulé (XLPE) sont en proportion massique de l'ordre de 10% dans la couche polymère composite isolante.

Selon certains modes de réalisation, la couche polymère composite est une couche polymère composite isolante basse tension dans laquelle la matrice polymère est une base de polyéthylène linéaire de basse densité (LLDPE) réticulé par un silane et dans laquelle ladite charge solide comprend des particules de polyéthylène réticulé (XLPE), les particules de polyéthylène réticulé (XLPE) étant en proportion massique comprise entre 2,5% et 50% dans la couche polymère composite isolante. Selon ces modes de réalisation, les particules de polyéthylène réticulé (XLPE) sont en proportion massique de l'ordre de 2,5%, ou de l'ordre de 5%, ou de l'ordre de 7,5%, ou de l'ordre de 10%, ou de l'ordre de 25%, ou de l'ordre de 50%, dans la couche polymère composite isolante

Selon un autre aspect, la présente invention a pour objet un dispositif électrique muni d'un système isolant selon l'invention, qui est un accessoire pour câble électrique.

Un tel accessoire selon l'invention comporte un système isolant qui comprend au moins une couche isolante comprenant une matrice polymère dans laquelle sont dispersée des particules solides de polymère réticulé. Ces particules solides assurent un rôle de charge solide dans le système isolant de l'accessoire et sont de préférence telles que décrites pour un câble selon l'invention. Ainsi, il s'agit avantageusement de particules d'au moins un matériau polymère réticulé, avantageusement recyclé. Par ailleurs les particules ont avantageusement une taille médiane d50 en masse et/ou une taille médiane d50 en volume comprise entre 10 et 1000 µm, cette taille médiane d50 en masse et/ou en volume pouvant typiquement être comprise entre 10 et 700 µm et par exemple entre 10 et 600 µm et par exemple entre 10 µm et 500 µm ou bien pouvant typiquement être comprise entre 50 et 700 µm et par exemple entre 50 et 600 µm et par exemple entre 50 et 500 µm et par exemple entre 100 µm et 500 µm et par exemple entre 400 et 500 µm et par exemple entre 420 et 460 µm.

Selon certains modes de réalisation, les particules d'au moins un matériau polymère réticulé de ladite dite charge solide sont des particules micronisées.

Selon certains modes de réalisation, l'accessoire pour câble électrique est une jonction ou une terminaison pour câble électrique.

L'invention s'étend aussi à un procédé de fabrication d'un dispositif (câble ou accessoire pour câble) selon l'invention, comportant le système isolant incluant une couche isolante de l'invention, ce procédé comprenant :
une étape d'application d'une couche d'un système isolant, cette étape incluant une incorporation de particules solides de polymère réticulé dans matrice polymère et l'application de la composition polymère composite obtenue notamment par extrusion
où les particules solides de polymère réticulé sont de préférence été obtenues dans une étape antérieure de broyage et/ou micronisation d'un déchet comprenant au moins un matériau polymère réticulé.

Il est à noter que le système isolant de l'invention comprend, entre autres constituants possibles, les particules solides de polymère réticulé au sein de la matrice polymère. Le système isolant peut bien entendu d'autres additifs dans la matrice polymère en plus des particules solides de polymère réticulé, par exemple des charges minérales, des plastifiants ou des stabilisants. Les additifs autres que des particules solides de polymère réticulé peuvent être ajoutés dans la matrice polymère :
- en tout ou partie avant les particules solides de polymère réticulé ; et/ou
- en tout ou partie après les particules solides de polymère réticulé ; et/ou
- en tout ou partie simultanément avec tout ou partie des particules solides de polymère réticulé.

En d'autres termes, certains additifs peuvent être pré ou post additionnés et d'autres ajoutés en mélange avec des particules solides de polymère réticulé, et, selon certains modes envisageables, les particules solides de polymère réticulé peuvent être ajoutés en plusieurs fois, avec ou sans pré-, post ou co-addition d'additifs.

Optionnellement, le dispositif électrique est un câble électrique comprenant une âme conductrice et un système isolant entourant ladite âme conductrice, et dans lequel le système isolant comprend au moins une couche comprenant une matrice polymère dans laquelle sont dispersées des particules solides de polymère réticulé.

Optionnellement, les particules solides de polymère réticulé sont issues d'un broyage et/ou micronisation de déchets ou rebuts à base d'un ou plusieurs polymères réticulés

Optionnellement, les particules solides de polymère réticulé ont une taille médiane d50 en masse et/ou en volume comprise entre 10 µm et 1000 µm, cette taille médiane d50 en masse et/ou en volume pouvant typiquement être comprise entre 10 et 700 µm et par exemple entre 10 et 600 µm et par exemple entre 10 µm et 500 µm ou bien pouvant typiquement être comprise entre 50 et 700 µm et par exemple entre 50 et 600 µm et par exemple entre 50 et 500 µm et par exemple entre 100 µm et 500 µm et par exemple entre 400 et 500 µm et par exemple entre 420 et 460 µm.

Optionnellement, les particules solides de polymère réticulé sont à base d'au moins un matériau polymère réticulé choisi dans le groupe consistant en :
- les polyéthylènes réticulés (XLPE),
- les copolymères éthylène-propylène, d'éthylène et de propène (EPR) réticulés, notamment des copolymères d'éthylène et de propène réticulés par des peroxydes,
- les polyéthylènes chlorés (CPE) réticulés,
- les silicones réticulés,
- les copolymères d'éthylène et d'acétate de vinyle (EVA) réticulés,
- les copolymères d'éthylène et de vinyle (EVM) réticulés,
- les copolymères de butadiène et d'acrylonitrile (NBR) réticulés,
- les terpolymères d'éthylène, de propène et de diène réticulés (EPDM) réticulés, et
- leurs mélanges en toutes proportions.

Optionnellement, la couche incluant les particules solides de polymère réticulé du câble électrique est formée par application d'une composition polymère composite comprenant une quantité desdites particules solides choisie pour que lesdites particules solides solide soient présentes dans la composition polymère composite avec une proportion massique comprise entre 1% et 50%.

Optionnellement, la couche est une couche électriquement isolante.

Optionnellement, la couche est une couche semi-conductrice.

Optionnellement, la matrice polymère de la couche est une matrice polymère thermoplastique.

Optionnellement, la matrice polymère de la couche est une matrice polymère réticulée.

L'invention concerne également un procédé de fabrication d'un dispositif tel que précité, ce procédé comprenant :
une étape d'application d'une couche d'un système isolant, cette étape incluant une incorporation de particules solides de polymère réticulé dans matrice polymère et l'application de la composition polymère composite obtenue, par exemple notamment par extrusion.

Optionnellement, les particules solides de polymère réticulé sont obtenues dans une étape antérieure de broyage et/ou micronisation d'un déchet comprenant au moins un matériau polymère réticulé.

D'autres caractéristiques et avantages de la présente invention apparaîtront à la lumière de la description des exemples non limitatifs d'un câble électrique selon l'invention, d'un accessoire pour câble électrique selon l'invention, et d'un procédé de fabrication selon l'invention en référence à la figure unique.

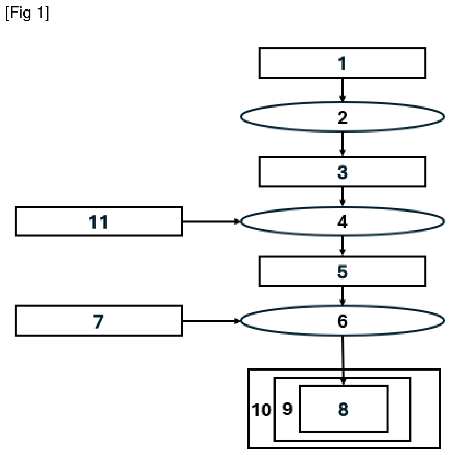

[Fig. 1] La Figure 1 est un logigramme illustratif d'un procédé de fabrication d'un câble électrique selon l'invention.

Un procédé selon l'invention est un procédé de fabrication d'un câble 10 électrique comprenant une âme 7 conductrice et un système 9 isolant s'étendant coaxial autour de l'âme 7 conductrice, le système 9 isolant comprenant au moins une couche 8 polymère composite comprenant une matrice 11 polymère et une charge, dite charge 3 solide, dispersée dans le volume de la matrice 11 polymère.

Dans un procédé selon l'invention, un déchet 1 comprenant au moins un matériau polymère réticulé non valorisable ni recyclable dans un procédé thermomécanique classique est collecté. Il peut s'agir d'une collecte d'un système isolant d'un câble électrique en fin de vie ou d'une collecte d'un rebut de production ou d'un rebut de purge d'une extrudeuse. Le déchet est collecté par tout moyen connu de l'homme du métier. S'agissant d'un câble électrique ou d'un accessoire en fin de vie, le câble électrique et/ou l'accessoire est(sont) soumis à une étape préalable de séparation et de tri de leurs principaux constituants lors de laquelle les métaux constitutifs de l'âme conductrice, d'un écran métallique et/ou d'une armature métallique sont séparés des matériaux non métalliques. Le déchet collecté et trié est alors soumis à une étape 2 de broyage progressif du déchet 1 collecté, complétée par au moins une étape de micronisation adaptée pour former une poudre de particules de forme globulaire et de taille médiane comprise entre 100 µm et 1000 µm. L'étape 2 de micronisation peut être réalisée par tout moyen connu tel que par exemple au moyen d'un microniseur à disque permettant de réaliser une micronisation par cisaillement, au moyen d'un microniseur à marteaux permettant de réaliser une micronisation par impact, ou au moyen d'un microniseur à jet d'air. Selon certains modes de réalisation, au moins une étape 2 de broyage et de micronisation successive est réalisée à froid, par exemple dans l'azote liquide. Une charge 3 solide formée d'une poudre est obtenue.

Le procédé selon l'invention comprend une étape 4 de dispersion de la charge 3 solide dans une matrice 11 polymère. Cette étape 4 de dispersion peut avantageusement être réalisée à chaud au moyen d'une extrudeuse mono-vis ou bi-vis ou d'un malaxeur de façon à former une composition 5 polymère composite dans laquelle ladite charge 3 solide est distribuée de façon sensiblement homogène dans la matrice 11 polymère. Cette étape 4 de dispersion est réalisée de façon à former une composition polymère 5 composite extrudable.

Lors d'une étape 6 ultérieure d'extrusion, la composition 5 de polymère composite est extrudée ou coextrudée autour d'une âme 7 conductrice formée d'un ou de plusieurs éléments métalliques conducteurs allongés, par exemple en aluminium ou en cuivre de façon à former une couche 8 polymère composite. La couche 8 polymère composite peut être extrudée au contact de l'âme 7 conductrice ou au contact d'une couche interposée entre l'âme 7 conductrice et la couche 8 polymère composite. On forme ainsi par extrusion un système 9 isolant comprenant ladite couche 8 polymère composite entourant l'âme 7 conductrice et le câble 10 électrique. Rien n'empêche de réaliser l'étape 4 de dispersion de la charge 3 solide dans la matrice 11 polymère lors de l'étape 6 d'extrusion par apport de ladite charge solide micronisée au moyen d'un dispositif doseur de ladite charge solide.

Dans un mode de réalisation particulier, non représenté mais lisible sur la figure 1, un procédé de fabrication d'un accessoire pour câble électrique comprend les étapes 2 successives de broyage et de micronisation d'un déchet 1, l'étape 4 de dispersion de la charge 3 solide dans une matrice 11 polymère et de formation de la composition 5 polymère composite, cette dispersion pouvant être effectée en une ou plusieurs étapes, avec ou sans pré-, co- ou post- addition d'additifs autres que la charge 3 solide . Dans ce mode de réalisation non représenté, la composition 5 polymère composite peut être utilisée pour la réalisation d'un accessoire pour câble électrique.

### EXEMPLES

EXEMPLE 1 - INCORPORATION DE XLPE MICRONISÉ DANS UN ISOLANT XLPE

### XLPE micronisé

Le XLPE micronisé (mXLPE) est une poudre obtenue par traitement de XLPE par cisaillement dans un microniseur à disques. Le diamètre d50 médian des particules de la poudre de XLPE micronisé, déterminé par la méthode des tamis vibrants, est compris entre 400 µm et 500 µm. Le d90 est de 500 µm et d99 inférieur à 630 µm.

Incorporation des particules de XLPE micronisé dans un mélange d'isolation basse tension

Des particules de XLPE micronisé sont incorporées dans une composition d'isolation basse tension constituée :
- de LLDPE d'indice de fluidité en masse de 3,3g/10min, 190°C, 2,16 Kg complémenté par un mélange stabilisant de colorant et d'antioxydant,
- d'une composition de réticulation à base de vinyltriméthoxy silane (VTMO) formulé,
par substitution d'une fraction massique de LLDPE complémenté par la même masse de particules de XLPE micronisé (compositions (B) à composition (G) selon le Tableau 1 ci-dessous).

**[Table 1]**

| | Composition d'isolation basse tension | | | | | | |
|---|---|---|---|---|---|---|---|
| | A | B | C | D | E | F | G |
| LLDPE complémenté, % en masse | 100 | 97,5 | 95 | 92,5 | 90 | 75 | 50 |
| XLPE micronisé, % en masse | 0 | 2,5 | 5 | 7,5 | 10 | 25 | 50 |

### Tableau 1

La composition d'isolation de référence (A), exempte de particules de XLPE micronisé est composée de :
- 98,8% en masse d'un mélange de LLDPE comprenant 0,6% en masse de mélange maitre stabilisant, et de
- 1,2% en masse de ladite composition de réticulation.

Mise en Œuvre : Faibles taux de XLPE micronisé (mXLPE), compositions (B) à (D)

### Etape 1 :

Un mélange maitre (MM mXLPE 25%) comprenant une proportion massique de 75% de LLDPE complémenté (composition (A)) et une proportion massique de 25% de XLPE micronisé est d'abord réalisé dans un extrudeur bi-vis selon le profil de température suivant 140 / 150 / 160 / 170 / 170 / 180 / 180 / 190 / 200 / 200°C, la vitesse de rotation des vis étant de 100 rpm et le débit en sortie d'extrudeur étant de 10 Kg/h.

### Etape 2

Le mélange maitre (MM mXLPE 25%) obtenu en sortie d'extrudeur bi-vis à l'étape 1 est dilué dans du LLDPE complémenté avec le mélange stabilisant de colorant et d'antioxydant (0,6% en masse) de façon à atteindre les proportions massiques annoncées de mXLPE et de mélange LLDPE complémenté, et comprises entre 2,5% et 7,5%. La dilution est réalisée dans un extrudeur bi-vis selon le profil de température suivant 140 / 150 / 160 / 170 / 170 / 180 / 180 / 190 / 200 / 200°C, la vitesse de rotation des vis étant de 100 rpm et le débit de mélange dilué en sortie d'extrudeur étant de 10 Kg/h.

### Etape 3

Chaque mélange dilué obtenu en sortie d'extrudeur bi-vis à l'étape 2 est mis en contact et maintenu en contact pour imprégnation avec ladite composition de réticulation en proportion massique de 1,2% par rapport au mélange dilué pendant 12 heures à température ambiante.

### Etape 4

Des bandes d'une épaisseur de 1 mm sont extrudées en extrudeur mono-vis selon le profil de température suivant 25 / 110 / 160 / 180 / 190 / 200 / 210 / 210°C, vis barrière , la vitesse de rotation de la vis étant de 25 rpm.

### Etape 5

Les bandes obtenues sout soumises à une réticulation forcée dans une eau portée à la température de 63°C pendant une durée de 24 heures.

Mise en Œuvre : Taux élevés de XLPE micronisé (mXLPE), compositions (E) à (G)

### Etape 1

Les compostions (E), (F) et (G) sont réalisées par mélange de LLDPE complémenté (composition (A)) avec le mélange stabilisant de colorant et d'antioxydant (0,6% en masse) et de XLPE micronisé en quantités choisies pour atteindre les proportions massiques annoncées de XLPE micronisé et de LLDPE complémenté, et comprises entre 10% et 50%. Le mélange est réalisé en extrudeur bi-vis selon le profil de température suivant 140 / 150 / 160 / 170 / 170 / 180 / 180 / 190 / 200 / 200°C, la vitesse de rotation des vis étant de 100 rpm et le débit de mélange dilué en sortie d'extrudeur étant de 10 Kg/h. Des résultats similaires peuvent être obtenus selon le profil de températures d'extrusion suivant 140 / 150 / 160 / 170 / 170 / 180 / 180 / 190 / 200 / 200°C.

### Etape 2

Chaque mélange dilué obtenu en sortie d'extrudeur bi-vis à l'étape 2 est mis en contact et maintenu en contact pour imprégnation avec ladite composition de réticulation en proportion massique de 1,2% par rapport au mélange dilué pendant 12 heures à température ambiante.

### Etape 3

Des bandes d'une épaisseur de 1 mm sont extrudées en extrudeur mono-vis selon le profil de température suivant 25 / 110 / 160 / 180 / 190 / 200 / 210 / 210°C, vis barrière et la vitesse de rotation de la vis étant de 25 rpm.

### Etape 4

Les bandes obtenues sout soumises à une réticulation forcée dans une eau portée à la température de 63°C pendant une durée de 24 heures.

### Caractérisation des Propriétés des Matériaux Composites obtenus - Résultats

Les propriétés des matériaux composites obtenus ont été analysées et comparées avec le cahier des charges d'un isolant basse tension XLPE. Les résultats sont donnés au tableau 2 ci-dessous.
[Table 2]

**Tableau 2**

| Propriétés | A | B | C | D | E | F | G |
|---|---|---|---|---|---|---|---|
| HST sous charge, % | 35% | 40% | 35% | 40% | 35% | 40% | 35% |
| HST sans charge, % | 0% | 0% | 0% | 0% | 0% | 0% | 0% |
| TSP, MPa | 33,4 ±1,7 | 23,2 ±2,5 | 22,9 ±0,6 | 23,0 ±1,5 | 19,4 ±1,2 | 16,4 ±0,7 | 12,4 ±0,9 |
| EB, % | 602 ±13 | 545 ±24 | 526 ±17 | 527 ±25 | 527 ±12 | 454 ±10 | 339 ±25 |
| Vieillissement TSP, MPa | 33,4 ±1,2 | 22,9 ±2,9 | 23,2 ±1,8 | 22,1 ±0,7 | 19,3 ±2,0 | 17,1 ±1,1 | 13,3 ±1,1 |
| Vieillissement Δ TSP, MPa | 0% | -1% | +1% | -4% | -1% | +4% | +7% |
| Vieillissement EB, % | 562 ±11 | 511 ±37 | 506 ±18 | 485 ±10 | 487 ±34 | 448 ±25 | 327 ±35 |
| Vieillissement Δ EB, % | -7% | -6% | -4% | -8% | -8% | -1% | -4% |
| Masse volumique, g/cm³ | 0,91 | 0,91 | 0,91 | 0,91 | 0,91 | 0,91 | 0,91 |
| Contenu en eau, mg/cm³ | / | / | / | / | 0,02 | 0,02 | 0,03 |
| MFI, g/10 min | 3,3 | 2,6 | 2,4 | 2,2 | 2,1 | 0,8 | 0 |

Le test d'allongement sous contrainte (« Hot Set Test », HST) est réalisé à la température de 200°C sous 0,2 MPa, tel que défini selon la norme NF EN 60811-2-1;
Le test de résistance à la traction (« Tensile Strength Peak », TSP) est réalisé à raison de 250 mm/min, tel que défini selon la Norme NF EN 60811-1-1 ;
Le test d'élongation à la rupture (« Elongation at Break », EB) est réalisé à raison de 250 mm/min, tel que défini selon la Norme NF EN 60811-1-1 ;
L'analyse des propriétés mécaniques après vieillissement thermique est réalisée à raison de 250 mm/min après exposition pendant 168 heures à la température de 135°C ;
L'analyse d'absorption d'eau est réalisée après exposition à 85°C pendant 335 heures ;
L'indice de Fluidité (« Melt Flow Index », MFI) avant réticulation est mesuré à la température de 190°C sous contrainte de 2,16 Kg. Pour la composition « G », l'indice de fluidité MFI est de 0,5 g/min sous contrainte de 5 Kg.

Les tests d'allongement à chaud (HST) sont conformes et non modifiés par rapport au cahier des charges. L'incorporation de mXLPE ne perturbe pas la réticulation des mélanges. L'incorporation de mXLPE jusqu'à 50 % en masse dans les mélanges conduit à une diminution des propriétés mécaniques, qui restent cependant conformes au cahier des charges. La tenue au vieillissement thermique et la prise en eau ne sont pas modifiées. Enfin, une augmentation de viscosité est à noter lors de l'ajout de mXLPE. Cette augmentation reste faible jusqu'à des taux de 10 % en masse.

### EXEMPLE 2

INCORPORATION DE XLPE MICRONISÉ DANS UN ISOLANT EPDM

### XLPE micronisé

Le XLPE micronisé (mXLPE) est une poudre obtenue par traitement de XLPE par cisaillement dans un microniseur à disques. Le diamètre d50 médian des particules de la poudre de XLPE micronisé, déterminé par la méthode des tamis vibrants, est compris entre 400 µm et 500 µm.

Incorporation des particules de XLPE micronisé dans un mélange d'isolation basse tension

Des particules de XLPE micronisé (mXLPE) sont incorporées dans un mélange formulé pour former un isolant basse tension à base d'éthylène-propylène-diène monomère (EPDM) réticulé par un peroxyde et comprenant une charge de particules de craie de diamètre moyen de 1 µm, à raison de 60% en masse dans le mélange. Le mélange formulé comprend en outre un plastifiant, des stabilisants et une charge inorganique.

Des particules de XLPE micronisé (mXLPE) sont incorporées dans le mélange formulé comprenant en masse :
- 40% de mélange de base d'EPDM,
- 60% de charge de particules de craie de diamètre moyen de 1 µm, par remplacement d'une fraction massique de la charge de particules de craie par la même masse de particules de XLPE micronisé (Tableau 3).

### [Table 3]

**Tableau 3**

| | | |
|---|---|---|
| [0142] | [0143] A | [0144] E |
| [0145] EPD M, % en masse | [0146] 40 | [0147] 40 |
| [0148] Partic ules de craie (D50 : 1µm) | [0149] 60 | [0150] 50 |
| [0151] XLPE micronisé, % en masse | [0152] 0 | [0153] 10 |

### Mise en Œuvre

Les mélanges (A) et (B) sont produits en trois étapes successives : incorporation des différentes matières premières, mXLPE compris, en mélangeur interne (18 min, décharge à 105 °C), puis
reprise du mélange sur mélangeur externe (bi-cylindres) à 105 °C, puis réticulation sous presse à 180 °C, pendant une durée égale à 2 fois le temps de durcissement optimal augmenté de 4 minutes. (durée 2*t90+4min)

### Caractérisations :

Les propriétés des matériaux composites obtenus ont été analysées. Les résultats sont donnés au tableau 4 ci-dessous.

### [Table 4]

**Tableau 4**

| | | |
|---|---|---|
| [0158] | [0159] | [0160] |
| [0161] Réticul ation, ts2 (s) | [0161] 3 | [0163] 0 |
| [0164] Réticul ation, t90 (min) | [0165] ,41 | [0166] 0,0 |
| [0167] Viscosi té Mooney, ML (MU) | [0168] 2 | [0169] 8 |
| [0170] Proprié tés mécaniques, TSP, MPa | [0171] ,2 | [0172] ,5 |
| [0173] Vieillis sement | [0175] ,9 | [0176] ,6 |
| [0174] TSP, MPa | | |
| [01774] Vieillis sement, ΔTSP, % | [0178] 0 | [0179] |
| [0180] Vieillis sement, ΔEB, % | [0181] | [0182] |
| [0183] Résist ance au froid, élongation, mg/cm2 | [0184] 77 | [0185] 48 |

Le durcissement des matériaux composites « A » et « B » est suivi pendant 30 minutes à la température de 180°C.
« ts2 » (scorch time) correspond au temps nécessaire pour augmenter la viscosité de la réticulation de 0,2 N.m ;
« t90 » (curing time) correspond au temps nécessaire pour atteindre 90% de la réticulation finale ;

Le test de viscosité Mooney est réalisé à 100°C.

Le test de résistance à la traction (« Tensile Strength Peak », TSP) réalisé à raison de 250 mm/min, tel que défini selon la Norme NF EN 60811-1-1

L'analyse des propriétés mécaniques (TSP, EB) après vieillissement thermique est réalisée à raison de 250 mm/min après exposition pendant 168 heures à la température de 135°C.

Le remplacement d'une fraction correspondant à 10% en masse de craie par une fraction correspondante de 10 % en masse de XLPE micronisé permet de conserver des propriétés conformes au cahier des charges attendu pour l'isolant. Le vieillissement thermique n'est pas impacté par ce remplacement.

La couche polymère composite est conforme au cahier des charges relatives au système isolant d'un câble électrique. La couche polymère composite du câble électrique selon l'invention permet de convertir des systèmes isolants de câbles électriques usagés en fin de vie et/ou des rebuts, notamment des rebuts de production ou des rebuts de purge d'une extrudeuse, constitutifs de déchets non recyclables par des procédés classiques d'extrusion et/ou d'injection thermomécaniques, en des composants à haute valeur ajoutée adaptés pour pouvoir être utilisés dans un procédé de fabrication de câbles électrique et/ou d'accessoires de câbles électriques et pour permettre la fabrication de câbles électriques et/ou d'accessoires aux propriétés mécaniques, isolantes ou semiconductrices satisfaisantes. L'invention permet en outre le recyclage de tels déchets et leur valorisation dans des applications visant à la fabrication de câbles électriques et/ou accessoires, et favorise une démarche de circularité -notamment de déchets polymères réticulés qui ne sont pas recyclables dans des procédés thermomécaniques classique- et de réduction des déchets de productions des câbles électriques.

## Revendications

1. Dispositif électrique muni d'un système isolant, ledit dispositif étant un câble électrique ou un accessoire pour câble électrique, et où le système isolant du dispositif inclut au moins une couche comprenant une matrice polymère dans laquelle sont dispersées des particules solides de polymère réticulé.

2. Dispositif électrique selon la revendication 1, qui est un câble (10) électrique comprenant une âme (7) conductrice et un système (9) isolant entourant ladite âme conductrice (7), et dans lequel le système isolant comprend au moins une couche (8) comprenant une matrice (11) polymère dans laquelle sont dispersées des particules (3) solides de polymère réticulé.

3. Dispositif (10) électrique selon la revendication 2, où les particules (3) solides de polymère réticulé sont issues d'un broyage et/ou micronisation de déchets ou rebuts à base d'un ou plusieurs polymères réticulés

4. Dispositif (10) électrique selon la revendication 2 ou 3, où les particules (3) solides de polymère réticulé ont une taille médiane d50 en masse et/ou en volume comprise entre 10 µm et 1000 µm, par exemple entre 50 et 600 µm.

5. Dispositif (10) électrique selon l'une des revendications 1 à 4, où les particules (3) solides de polymère réticulé sont à base d'au moins un matériau polymère réticulé choisi dans le groupe consistant en :
- les polyéthylènes réticulés (XLPE),
- les copolymères éthylène-propylène, d'éthylène et de propène (EPR) réticulés, notamment des copolymères d'éthylène et de propène réticulés par des peroxydes,
- les polyéthylènes chlorés (CPE) réticulés,
- les silicones réticulés,
- les copolymères d'éthylène et d'acétate de vinyle (EVA) réticulés,
- les copolymères d'éthylène et de vinyle (EVM) réticulés,
- les copolymères de butadiène et d'acrylonitrile (NBR) réticulés,
- les terpolymères d'éthylène, de propène et de diène réticulés (EPDM) réticulés, et
- leurs mélanges en toutes proportions.

6. Dispositif (10) électrique selon l'une des revendications 1 à 5, où la couche (8) incluant les particules solides de polymère réticulé du câble (10) électrique est formée par application d'une composition polymère composite comprenant une quantité desdites particules solides (3) choisie pour que lesdites particules solides (3) solide soient présentes dans la composition (8) polymère composite avec une proportion massique comprise entre 1% et 50%.

7. Dispositif (10) électrique selon l'une des revendications 1 à 6, où la couche (8) est une couche électriquement isolante.

8. Dispositif (10) électrique selon l'une des revendications 1 à 6, où la couche (8) est une couche semi-conductrice.

9. Dispositif (10) électrique selon la revendication 7 ou 8, où la matrice polymère de la couche (8) est une matrice polymère thermoplastique.

10. Dispositif (10) électrique selon la revendication 7 ou 8, où la matrice polymère de la couche (8) est une matrice polymère réticulée.

11. Dispositif (10) électrique selon la revendication 1, le dispositif électrique étant une jonction ou une terminaison pour câble électrique.

12. Procédé de fabrication d'un dispositif selon la revendication 1, ce procédé comprenant :
une étape d'application d'une couche d'un système isolant, cette étape incluant une incorporation de particules solides de polymère réticulé dans matrice polymère et l'application de la composition polymère composite obtenue, par exemple notamment par extrusion

13. Procédé selon la revendication 12, où les particules solides de polymère réticulé sont obtenues dans une étape antérieure de broyage et/ou micronisation d'un déchet comprenant au moins un matériau polymère réticulé.
